# EUROPEAN PATENT APPLICATION

(11) **EP 4 848 107 A1**
(43) Date of publication of application: **02.12.2026**
(21) Application number: 26182064.1
(22) Date of filing: 29.05.2026
(51) Int. Cl.: G06F 16/75, G06F 16/783

(54) **VIDEO UNDERSTANDING AND CLUSTERING USING MULTIPLE LANGUAGE MODELS**

(30) Priority: 29.05.2025 US 202519222209
(71) Applicant: Bytedance Technology Ltd., KY1 - 1205 Grand Cayman Cayman Islands (KY)
(72) Inventor: XIE, Zhixuan, Vancouver, V7Y 1K4 (CA); XIAO, Zhengyi, Los Angeles, 90066 (US)
(74) Representative: Marks & Clerk LLP

(57) **Abstract**

Methods, systems, and apparatus, including computer programs encoded on computer storage media, for extracting. One example method includes obtaining (204), from a first video, a first description generated by a first language model of multiple language models implemented on one or more servers, where the first description describes a plot of the first video; obtaining (206) a second description generated by a second language model of the multiple language models, where the second description describes one or more entities in the first video; obtaining (208) a third description generated by a third language model of the multiple language models, where the third description describes an intent of the first video; and generating (212) a textual description of the first video based on the first description, the second description, and the third description.

## Description

### TECHNICAL FIELD

This specification relates to understanding and clustering videos using multiple language models.

### BACKGROUNDS

As the volume of video data continues to grow rapidly, efficiently understanding and organizing video content has become increasingly important. Single-modal models can be utilized to extract features from video content and perform classification and clustering on videos.

### SUMMARY

This specification describes technologies for video understanding and clustering using language models.

According to a first aspect, a computer-implemented method is provided. The method includes obtaining, from a first video, a first description generated by a first language model of multiple language models implemented on one or more servers, where the first description describes a plot of the first video; obtaining a second description generated by a second language model of the multiple language models, where the second description describes one or more entities in the first video; obtaining a third description generated by a third language model of the multiple language models, where the third description describes an intent of the first video; and generating a textual description of the first video based on the first description, the second description, and the third description.

With reference to the first aspect, in some implementations, the method includes obtaining a fourth description generated by a fourth language model, where the fourth description includes information in the first video that is associated with one or more label categories. The textual description of the first video is generated based on the first description, the second description, the third description and the fourth description.

With reference to the first aspect, in some implementations, the method includes obtaining, from the second language model, an initial description of one or more entities in the first video; obtaining, from a first database, descriptions related to the initial description; and sending the descriptions to the second language model to generate a refined description based on the first video and the descriptions related to the initial description.

With reference to the first aspect, in some implementations, the second language model is communicatively coupled to a first database. The method includes in response to determining that the second description is not included in the first database, adding the second description to the first database.

With reference to the first aspect, in some implementations, the fourth language model is communicatively coupled to a second database. The method includes, in response to determining the fourth description includes information corresponding to a label category that is not included in the second database, adding the label category to the second database.

With reference to the first aspect, in some implementations, the method includes sending the first description, the second description, the third description, and the fourth description to a fifth language model; and generating the textual description of the first video by the fifth language mode that aggregates the first description, the second description, the third description, and the fourth description.

With reference to the first aspect, in some implementations, the method further includes generating an embedding of the first video based on the textual description of the first video.

With reference to the first aspect, in some implementations, the method further includes determining whether the first video is similar to a second video based on embeddings of the first video and the second video.

With reference to the first aspect, in some implementations, the method further includes, in response to determining that the first video is similar to the second video, adding the first video to a same cluster as the second video.

According to a second aspect, one or more computer-readable storage media is provided. The one or more computer-readable storage media stores one or more instructions that, when executable by one or more computers, cause the one or more computers to perform the method according to the first aspect and/or one or more implementations of the first aspect.

According to a third aspect, a computer-implemented system is provided. The computer-implemented system includes one or more computers and one or more computer memory devices interoperably coupled with the one or more computers. The one or more computer memory devices have computer-readable storage media storing one or more instructions that, when executed by the one or more computers, perform the method according to the first aspect and/or one or more implementations of the first aspect.

The details of one or more embodiments of the subject matter of this specification are set forth in the accompanying drawings and the description below. Other features, aspects, and advantages of the subject matter will become apparent from the description, the drawings, and the claims.

### BRIEF DESCRIPTION OF THE DRAWINGS

FIG.1 illustrates an example diagram of a system for video understanding.
FIG. 2 illustrates an example process for understanding and clustering videos using multiple language models.
FIG. 3 is an example computing system.

Like reference numbers and designations in the various drawings indicate like elements.

### DETAILED DESCRIPTION

The present disclosure provides techniques for efficiently understanding and organizing video content by using artificial intelligence (AI) or machine learning models such as language models. In some cases, a single-modal model can be utilized to extract features from video content, generate an embedding representing each video, and perform classification and clustering on videos. For example, convolutional neural networks (CNNs) can be utilized to classify visual features extracted from video frames. For another example, transformer-based models, such as BERT-based models, can be utilized to classify or cluster textual information such as subtitles in videos. For a further example, recurrent neural networks, such as long short-term memory (LSTM) networks, may be utilized to process audio streams in videos. As an example, a video clustering process can involve extracting visual features from videos by applying CNNs to key frames, performing clustering based on the extracted visual features using algorithms such as a K-means algorithm, and outputting clustering results.

However, single-modal models may rely on feature information from a single modality to analyze, classify, or cluster videos, and may fail to capture a comprehensive semantic meaning of a video conveyed across different modalities (e.g., a combination of visual, audio, textual, behavioral, and high-level intent modalities). Without performing integrated analysis across multiple modalities, single-modal models may lack the capability to achieve a complete and nuanced understanding of video content to the extent necessary for precise video classification and clustering. As such, video classification and clustering may be limited with respect to processing efficiency, depth, accuracy, and comprehensiveness.

The present disclosure provides techniques for video understanding, for example, by generating a description of a video based on a multi-model collaboration framework. The generated description can be more precise and comprehensive than a description generated by a single model, thereby facilitating more efficient video clustering. In some implementations, multiple multi-modal large language models (LLMs) can be deployed to perform multi-dimensional analysis and feature extraction from videos. In some implementations, the multiple different LLMs can be independent of one another, for example, as a result of being separately or independently trained based on training data or configured to generate descriptions from different perspectives, including plot (e.g., storyline) extraction, entity and action identification, intent inference, and structured label information extraction. Further, outputs from the multiple LLMs can be aggregated to form a unified and comprehensive textual description representing the content of each video/video segment. In some implementations, one or more of the multiple LLMs can employ retrieval-augmented generation (RAG) techniques to enhance the consistency, expressiveness, and richness of their outputs. For example, an LLM can retrieve semantically relevant descriptions from an external database, and use the retrieved descriptions as input during the generation process. In some implementations, a language model (e.g., a Bert-based model, or a GPT-based model) can transform the aggregated descriptions into numerical representations, such as embedding vectors. The embedding vectors can be used to compute similarity among videos/video segments, so that semantically similar videos can be clustered together.

The described techniques can achieve one or more technical benefits/advantages. For example, by employing multiple large language models trained to analyze different aspects of input videos, the output results can enable more efficient video clustering, such as the accuracy (e.g., how similar a retrieved video is to the current video) and recall rate (e.g., how many similar videos can be successfully identified) of the clustering may be improved. Improved clustering can provide better support for downstream applications such as personalized content recommendation, semantic video search, and large-scale video data management. For another example, by integrating information from multiple modalities, including visual appearance, audio signals, textual information, and inferred intent, the described techniques can achieve a more comprehensive and detailed understanding of video content, compared to single-modal solutions. Further, RAG techniques can enrich the descriptive quality of features extracted for clustering, which can improve semantic alignment and cluster coherence. In addition, a multi-model collaboration framework can be dynamically adaptive, allowing seamless substitution for alternative or updated models to improve performance or accommodate evolving data domains. In some implementations, different or additional advantages can be achieved.

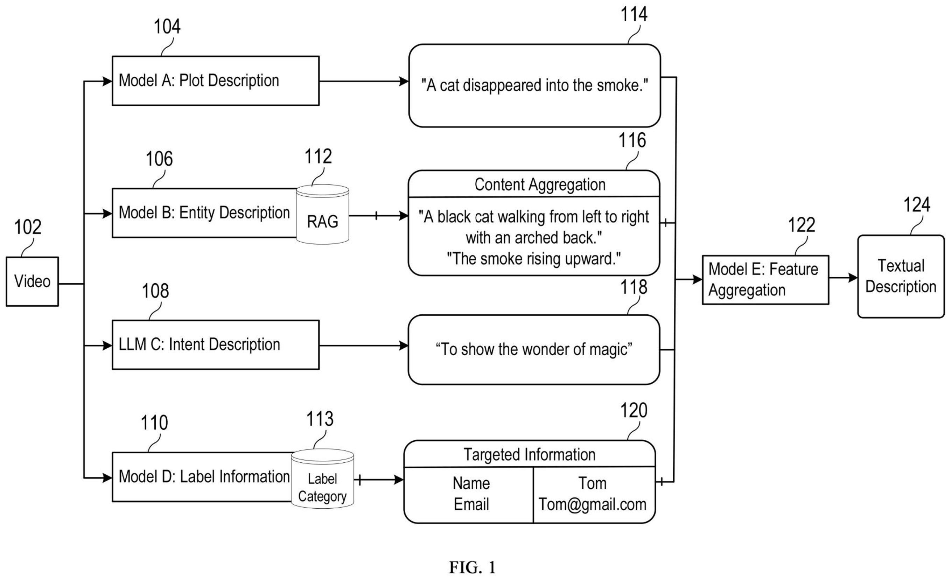

FIG.1 illustrates an example diagram of a system 100 for video understanding, for example, by generating a textual description 124 of a video 102. In some implementations, a language model can generate content based on an input video. A language model can be implemented to extract features from a video by processing multimodal inputs, including but not limited to visual frames, textual data, and audio signals. For example, a language model can analyze visual elements such as objects, scenes, and motions captured in key frames; transcribe and interpret audio tracks including speech, music, or environmental sounds; and process embedded textual information such as subtitles or metadata. Through the integration of these multimodal signals, the language model can generate structured or unstructured representations that capture semantic, temporal, and/or contextual features of the video. In some implementations, the extracted features may be represented as textual descriptions, embedding vectors, or hierarchical labels, depending on the downstream application needs. The representations can support a variety of tasks, including but not limited to video classification, clustering, recommendation, or retrieval.

As an example, social media platforms can utilize language models for video analysis and clustering. By organizing videos based on their extracted features, social media platforms may more effectively recommend relevant content to users, so that users can be presented with videos that match their interests, viewing habits, or demographic profiles. Further, clustering videos based on similarity (e.g., semantic similarity) can enable streamlined content categorization, targeted advertising, trend detection, and improved searchability within the platform.

**In** some implementations, multiple language models may be trained (e.g., independently) based on the same or different training data to respectively focus on a distinct aspect of video content. For example, some models (e.g., the first language model 104) may be trained to specialize in plot extraction, e.g., by generating descriptions (e.g., texts) that capture the overarching storyline or sequence of events depicted in a video. Some models (e.g., the second language model 106) may be trained to focus on entity and action extraction, e.g., by identifying specific objects, characters, and their associated movements or interactions within a video. Some models (e.g., the third language model 108) may be trained to determine the underlying intent or purpose conveyed by a video, such as promoting a product, or narrating an emotional story. Some models (e.g., the fourth language model 110) may be trained to extract structured label information from the video content. Label information can be specific and structured data items that correspond to a distinct and predefined category (e.g., referred to as "a label category"), such as name, email address, phone number, location identifier, etc. In some implementations, label information extracted from a video may be used to generate structured metadata associated with video. The structured metadata can enable efficient indexing of videos, and allow quick content retrieval based on entity-specific queries, such as searches for particular character names, locations, brand references, or other categorical information.

As shown in FIG. 1, the system 100 can include multiple language models each focusing on a specific aspect of the video content. Compared to using a single language model to generate a textual description of a video 102, the system 100 can aggregate outputs from multiple language models focusing on multiple aspects, and therefore can generate a more comprehensive description of the content of the video 102. As an example, the system 100 includes four language models for extracting features from the video 102, and a language mode for aggregating outputs from the four language models to generate a comprehensive textual description 124 of the video 102. It is understood that the system 100 can include any suitable number of language models, and each language model can be trained to specialize in a different aspect of a video (e.g., determining emotions and sentiments underlying the video).

As shown in FIG. 1, a video 102 can be sent as input to a first language model 104, a second language model 106, a third language model 108, and a fourth language model 110, respectively. For example, the video 102 may be created and uploaded by a user, for example, to a social media or video sharing platform. For another example, the video 102 may be an existing video in a video database.

The first language model 104 (e.g., Model A) can be trained/configured to analyze and determine a plot (e.g., overall storyline) of the video 102. For example, the first language model 104 can use natural language processing (NLP) techniques to extract features and generate a first description 114 (e.g., textual description) that represents the sequence of events, narrative flow, and contextual developments within the video 102. As an example, the first description 114 may be "a cat disappears into the smoke".

The second language model 106 (e.g., Model B) can be trained/configured to identify specific entities (e.g., objects, characters) in the video 102 and generate detailed descriptions of their corresponding actions, e.g., by capturing both static and dynamic aspects of the video scenes. The second language model 106 can generate a second description 116 that describes the specific entities such as one or more actions, statuses, or other states of the specific entities. As an example, the second language model 106 can identify "cat" and "smoke" as two entities in the video 102, and generate the second description 116 as "a black cat walking from left to right with an arched back" and "the smoke rising upward."

In some implementations, the second language model 106 can employ retrieval-augmented generation (RAG) techniques to enrich its output. First, the second language model 106 can generate an initial description relating to the entities in the video. For example, the initial description may identify basic movements or interactions, such as "a cat moving from left to right" or "smoke rising upward." Subsequently, the system 100 queries a first database 112 that is communicatively coupled to the second language model 106. The first database 112 can store textual data used to supplement the generated outputs of the second language model 106. For example, the first database 112 can have a large number of descriptions such as previously generated descriptions, excerpts from external knowledge sources, or curated examples. The system 100 can make queries to the first database 112 based on keywords, semantic embeddings, or other structured features derived from the initial description, and obtain (e.g., retrieve) one or more descriptions from the first database 112 that are semantically related to the initial description. As an example, based on the initial description "a cat moving from left to right" or "smoke rising upward," "a white cat dashing" and "a cat arching its back while walking" may be retrieved from the first database 112 as descriptions related to the initial description.

The retrieved descriptions can then be sent back to the second language model 106 as auxiliary inputs. In response, the second language model 106 can generate a refined description based on both the original video content and the related retrieved descriptions. The refined description can be more distinctive and richer in detail than the initial description. In some implementations, the second language model 106 can output the refined description as the second description 116. For example, the second language model 106 can ultimately output descriptions such as "a black cat walking from left to right with an arched back" and "white smoke rising upward" as the second description 116. In some implementations, by employing SAG techniques, the second language model 106 can not only capture the specific entities and states of the entities depicted in the video 102, but also generate textual descriptions that facilitate retrieval and semantic indexing.

In some implementations, the second language model 106 can iteratively employ the query-and-refine process. For example, the refined description can be further used to formulate an additional query to the first database 112. The system 100 may perform a second retrieval based on features extracted from the refined description, and retrieve further semantically related descriptions from the first database 112. The second language model 106 can then generate a further refined description based on both the refined description and the additional retrieved content. In some implementations, other language models of the system 100 can also employ SAG techniques.

In some implementations, the first database 112 can be a self-training database, which can continuously update and expand its content based on outputs of the second language model 106. For example, after the second language model 106 generates the second description 116, the system 100 can determine whether the second description 116 is already included in the first database 112. The determination may involve comparing the second description against existing database entries, using exact matching, semantic similarity thresholds, or other content-matching techniques. In response to determining that the second description 116 is not included in the first database 112, the system 100 can add the second description 116 to the first database 112. For example, "white smoke rising upward" can be added to the first database 112 if it is not already included. As such, the first database 112 may accumulate more entries and increasingly detailed textual descriptions over time.

The third language model 108 (e.g., Model C) can be trained/configured to determine the underlying intent (e.g., a purpose or a theme) of video 102. For example, the third language model 108 can apply deep learning techniques to analyze visual, audio, and contextual cues to infer the high-level goals, messages, or thematic objectives communicated through the video 102. The third language model 108 can generate a third description 118 (e.g., text) that describes the underlying intent of the video 102. As an example, the third description may be "to show the wonder of magic".

The fourth language model 110 (e.g., Model D) can be trained/configured to extract structured label information from the video 102. The structured label information can be associated with one or more label categories stored in a second database 113 that is communicatively coupled to the fourth language model 110. For example, the second database 113 can store a plurality of label categories such as character name, animation character name, email address, and other structured data fields. The fourth language model 110 can generate a fourth description 120 (e.g., text in a structured format) that includes targeted information associated with one or more label categories (e.g., label categories in the second database 113). As an example, the fourth language model 110 may generate {"Animation Character Name":"Tom", "Email":"tom@mail.com"} as the fourth description 120.

In some implementations, the second database 113 can be a self-training database, which can continuously update and expand its content based on outputs of the fourth language model 110. For example, after the fourth language model 110 identifies label information corresponding to a set of label categories, the system 100 can determine whether each of the set of label categories is already included in the second database 113. In response to determining that any of the set of label categories is not included in the second database 113, the system 100 can add the label category to the second database 113. For example, if the fourth language model 110 extracts a brand name from the video 102, "brand name" can be added to the second database 113 as a new label category, if it is not already included in the second database 113.

In some implementations, outputs of the first language model 104, the second language model 106, the third language model 108, and the fourth language model 110 can be sent to a fifth language model 122 (e.g., Model E). The fifth language model 122 can be an aggregation or fusion model that is trained/configured to aggregate (e.g., collect, combine, integrate, or fuse) features of the video 102 extracted by multiple upstream language models, and then generate a textual description 124 that encapsulates multiple semantic dimensions of the video 102. The aggregation may be performed using a variety of techniques, including sequence concatenation with learned transition structures, attention-based fusion of overlapping content, or neural re-encoding of concatenated feature segments into a fluent and contextually coherent narrative. As an example, by aggregating the first description 114 describing the plot of the video 102, the second description 116 describing entities in the video 102, the third description 118 describing an intent of the video 102, and the fourth description 120 including structured label information, the fifth language model 122 can generate a textual description 124 of the video 102 as "in a magical performance, a black cat named Tom walks from left to right with an arched back, ultimately vanishing into a cloud of rising white smoke."

In some implementations, the fifth language model 122 may also resolve contradictions among the various inputs, remove redundancies, or enrich the final description by consulting external knowledge sources. The output of the fifth language model 122 may be provided in free-text form, or converted into structured formats such as embedding vectors or semantic graphs, depending on the needs of downstream applications.

In some implementations, outputs of the upstream models (e.g., language models 104 to 110) can be aggregated through other approaches, instead of using a language model. For example, an attention-based mechanism can be employed to assign different weights to the outputs of the first to the fourth language models, so that the aggerated textual description 124 can prioritize information that is more contextually relevant. For another example, a graph-based fusion approach, such as a graph neural network (GNN), can be employed to model interdependencies between different types of extracted features. For instance, the outputs of the upstream models may be represented as nodes in a heterogeneous graph. A GNN may then be applied to propagate and integrate feature information across the heterogeneous graph.

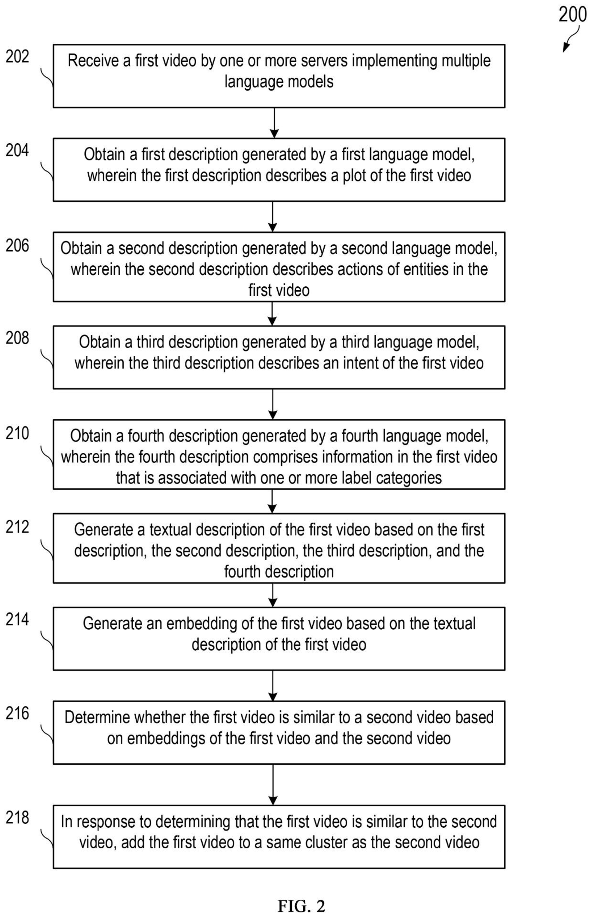

Compared to textual descriptions generated by a single language model, the system 100 utilizing multiple language models can generate a more unified, comprehensive, and coherent textual description 124 of the video 102. In some implementations, the textual descriptions 124 can preserve fine-grained details from each language models 104, 106, 108, 110 while enhancing readability, semantic cohesion, and downstream utility. For example, as discussed in detail with respect to FIG. 2, the textual description 124 may serve as a comprehensive feature representation for subsequent tasks such as clustering, indexing, retrieval, or recommendation.

In some implementations, the language models 104, 106, 108 110, 122 can each be a large language model (LLM), such as a GPT-based LLM or a BERT-based LLM that can generate textual content based on video inputs. Each of the language models 104, 106, 108, 110, 122 can be implemented on one or more servers (e.g., remote cloud servers). In some implementations, the language models 104, 106, 108, 110, 122 may be implemented by different servers. In some other implementations, two or more of the language models 104, 106, 108, 110, or 122 may be implemented on the same server(s).

In some implementations, the language models 104, 106, 108 110, 122 may be replaced with alternative models that provide similar functionalities but have different architectural designs. For example, the first language model 104 or the third language model 108 can be any suitable model capable of processing videos as input. For another example, the second language model 106 can be any suitable model, or a combination of models, capable of extracting visual features.

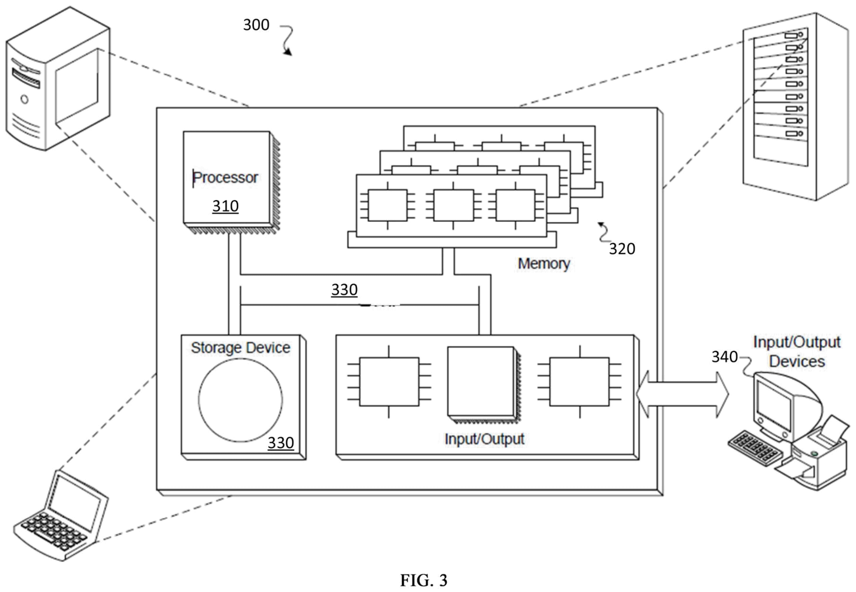

FIG. 2 illustrates an example process 200 for clustering videos using multiple language models. For convenience, the process 200 will be described as being performed by a system (e.g., the system 100 shown in FIG. 1 or the system 300 shown in FIG. 3), located in one or more locations, and programmed appropriately in accordance with this specification. Further, some of the operations may be omitted, or performed simultaneously or in a different order than shown in FIG. 2.

At 202, a first video (e.g., video 102 of FIG. 2) is received by one or more servers implementing multiple language models. Each language model can analyze the first video and generate a description (e.g., textual description) of the first video by extracting features from the first video. The multiple language models can be implemented and executed using one or more processors. For example, the multiple language models can be implemented in a single server, or distributed in more than one servers.

At 204, a first description (e.g., first description 114 of FIG. 1) generated by a first language model (e.g., first language model 104 of FIG. 1) is obtained. The first description can describe a plot of the first video. A description can include, for example, a textual description (e.g., text). In some implementations, a description can include, for example, one or more of a textual, audio, or graphic representation, or a combination thereof.

At 206, a second description (e.g., second description 116 of FIG. 1) generated by a second language model (e.g., second language model 106 of FIG. 1) is obtained. The second description can describe one or more entities in the first video. An entity can be a person, an animal, a plant, a creature, a thing, or another object in a video. The second description can describe a state (e.g., an action, a status, a position, a movement, a condition, etc.) of the one or more entities in the first video. In some implementations, the second description includes a description of only one of the one or more entities (e.g., the main object or character) in the first video. In some implementations, the second description includes a description of more than one of the one or more entities.

At 208, a third description (e.g., third description 118 of FIG. 1) generated by a third language model (e.g., third language model 108 of FIG. 1) is obtained. The third description can describe an intent (e.g., a purpose or a theme) of the first video.

At 210, a fourth description (e.g., fourth description 120 of FIG. 1) generated by a fourth language model (e.g., fourth language model 110 of FIG. 1) is obtained. The fourth description can include information (e.g., structured label information) associated with one or more label categories (e.g., distinct and predefined categories).

At 212, a textual description (e.g., textual description 124 of FIG. 1) of the first video can be generated based on the first description, the second description, the third description, and the fourth description. In some implementations, the first description, the second description, the third description, and the fourth description can be sent to a fifth language model (e.g., fifth language model 122 of FIG. 1) that is trained to aggregate outputs from upstream language models. The fifth language model can generate a comprehensive description of the first video based on the first description, the second description, the third description, and the fourth description each focusing on a special aspect. For example, the fifth language model can be an aggregation AI model that processes, modifies, combines, fuses, or otherwise aggregates input descriptions to generate a comprehensive description of the first video. In some implementations, video clustering can be performed based on the comprehensive descriptions of videos.

At 214, an embedding (e.g., a vector in a continuous, high-dimensional space) of the first video can be generated based on the textual description of the first video. The embedding can capture semantic meaning, structure, and/or content of the first video. In some implementations, the fifth language model, or another language model such as a GPT, BERT or another transformer-based model, can generate the embedding based on the textual description of the first video. Videos having similar semantic meanings can be mapped to embeddings that are close together in the high-dimensional space. As an example, a textual description such as "in a magical performance, a cat walks from left to right and ultimately vanishes into rising smoke" may be mapped into a high-dimensional embedding, which can reflect the underlying content of the target video. Numeric representations such as embeddings can enable more accurate and fine-grained similarity measurements across different videos.

At 216, a similarity between the first video and a second video (e.g., a previously analyzed video) can be determined based on embeddings of the first video and the second video. For example, similarity can be determined based on cosine similarity, Euclidean distance, or other distance metrics of the embeddings. For example, a smaller Euclidean distance between two embeddings can indicate a higher similarity between two corresponding videos.

At 218, in response to determining that the first video is similar to the second video, the first video can be added to the same cluster as the second video. In some implementations, if the distance between the embeddings of the first video and the second video is smaller than a threshold, the first video and the second video can be determined as similar, so that the first video can be identified as belonging to the same cluster as the second video. In some implementations, based on similarity computed based on embeddings, video clustering can be performed by employing a clustering algorithm such as K-means, Density-Based Spatial Clustering of Applications with Noise (DBSCAN), or hierarchical clustering. For a first example, K-means algorithm can partition the embedding space into a predefined number of clusters by minimizing intra-cluster distance while maximizing inter-cluster separation. For a second example, DBSCAN algorithm can identify dense regions of embeddings and group them without requiring a fixed number of clusters, so that the clustering can be more robust against noise or outliers. For a third example, hierarchical clustering algorithm can construct a tree-like structure by progressively merging or splitting clusters based on distance metrics.

In some implementations, the clustering algorithm may be selected based on the characteristics of the embedding distribution, the size and diversity of the video dataset, and/or system requirements for scalability and interpretability. The outcome of the clustering can group similar videos into the same cluster, which can facilitate further tasks such as indexing, recommendation, or summarization. For example, an index label may be assigned to each cluster. These index labels may enable efficient lookup and retrieval of related videos, such as videos having similar semantic meaning and/or sharing similar content theme.

FIG. 3 is an example computer or computer-implemented system 300. The system 300 can be used for the operations described in association with the implementations described herein, for example, as a data processing apparatus or server of a platform for understanding and clustering videos using multiple language models. For example, the system 300 may be included in computing devices of the one or more online components and/or the one or more offline components. The system 300 includes a processor 310, a memory 320, a storage device 330, and an input/output device 340. The components 310, 320, 330, and 340 are interconnected using a system bus 350. The processor 310 is capable of processing instructions for execution within the system 300. In some implementations, the processor 310 is a single-threaded processor. In some implementations, the processor 310 is a multi-threaded processor. The processor 310 is capable of processing instructions stored in the memory 320 or on the storage device 330 to display graphical information for a user interface on the input/output device 340.

The memory 320 stores information within the system 300. In some implementations, the memory 320 is a computer-readable medium. The memory 320 can be a volatile memory unit or a non-volatile memory unit. The storage device 330 is capable of providing mass storage for the system 300. The storage device 330 is a computer-readable medium. The storage device 330 may be a floppy disk device, a hard disk device, an optical disk device, or a tape device. The input/output device 340 provides input/output operations for the system 300. The input/output device 340 includes a keyboard and/or pointing device. The input/output device 340 includes a display unit for displaying graphical user interfaces.

In this specification the term "engine," "collector," "sampler," "manager," "calibrator," or "calculator" will be used broadly to refer to a software-based system or subsystem that can perform one or more specific functions. Generally, an engine (or a collector, a sampler, a manager, a calibrator, a calculator) will be implemented as one or more software modules or components, installed on one or more computers in one or more locations. In some cases, one or more computers will be dedicated to a particular engine (or collector, sampler, manager, calibrator, calculator); in other cases, multiple engines (or collectors, samplers, managers, calibrators, calculators) can be installed and running on the same computer or computers.

Embodiments of the subject matter and the functional operations described in this specification can be implemented in digital electronic circuitry, in tangibly-embodied computer software or firmware, in computer hardware, including the structures disclosed in this specification and their structural equivalents, or in combinations of one or more of them. Embodiments of the subject matter described in this specification can be implemented as one or more computer programs, i.e., one or more modules of computer program instructions encoded on a tangible non-transitory storage medium for execution by, or to control the operation of, data processing apparatus. The computer storage medium can be a machine-readable storage device, a machine-readable storage substrate, a random or serial access memory device, or a combination of one or more of them. Alternatively or in addition, the program instructions can be encoded on an artificially-generated propagated signal, e.g., a machine-generated electrical, optical, or electromagnetic signal, that is generated to encode information for transmission to suitable receiver apparatus for execution by a data processing apparatus.

The term "data processing apparatus" refers to data processing hardware and encompasses all kinds of apparatus, devices, and machines for processing data, including by way of example a programmable processor, a computer, or multiple processors or computers. The apparatus can also be, or further include, special purpose logic circuitry, e.g., an FPGA (field programmable gate array) or an ASIC (application-specific integrated circuit). The apparatus can optionally include, in addition to hardware, code that creates an execution environment for computer programs, e.g., code that constitutes processor firmware, a protocol stack, a database management system, an operating system, or a combination of one or more of them.

A computer program, which may also be referred to or described as a program, software, a software application, an app, a module, a software module, a script, or code, can be written in any form of programming language, including compiled or interpreted languages, or declarative or procedural languages; and it can be deployed in any form, including as a stand-alone program or as a module, component, subroutine, or other unit suitable for use in a computing environment. A program may, but need not, correspond to a file in a file system. A program can be stored in a portion of a file that holds other programs or data, e.g., one or more scripts stored in a markup language document, in a single file dedicated to the program in question, or in multiple coordinated files, e.g., files that store one or more modules, sub-programs, or portions of code. A computer program can be deployed to be executed on one computer or on multiple computers that are located at one site or distributed across multiple sites and interconnected by a data communication network.

The processes and logic flows described in this specification can be performed by one or more programmable computers executing one or more computer programs to perform functions by operating on input data and generating output. The processes and logic flows can also be performed by special purpose logic circuitry, e.g., an FPGA or an ASIC, or by a combination of special purpose logic circuitry and one or more programmed computers.

Computers suitable for the execution of a computer program can be based on general or special purpose microprocessors or both, or any other kind of central processing unit. Generally, a central processing unit will receive instructions and data from a read-only memory or a random access memory or both. The essential elements of a computer are a central processing unit for performing or executing instructions and one or more memory devices for storing instructions and data. The central processing unit and the memory can be supplemented by, or incorporated in, special purpose logic circuitry. Generally, a computer will also include, or be operatively coupled to receive data from or transfer data to, or both, one or more mass storage devices for storing data, e.g., magnetic, magneto-optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device, e.g., a universal serial bus (USB) flash drive, to name just a few.

Computer-readable media suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks; magneto-optical disks; and CD-ROM and DVD-ROM disks.

To provide for interaction with a user, embodiments of the subject matter described in this specification can be implemented on a computer having a display device, e.g., a CRT (cathode ray tube) or LCD (liquid crystal display) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's device in response to requests received from the web browser.

Embodiments of the subject matter described in this specification can be implemented in a computing system that includes a back-end component, e.g., as a data server, or that includes a middleware component, e.g., an application server, or that includes a front-end component, e.g., a client computer having a graphical user interface, a web browser, or an app through which a user can interact with an implementation of the subject matter described in this specification, or any combination of one or more such back-end, middleware, or front-end components. The components of the system can be interconnected by any form or medium of digital data communication, e.g., a communication network. Examples of communication networks include a local area network (LAN) and a wide area network (WAN), e.g., the Internet.

The computing system can include clients and servers. A client and server are generally remote from each other and typically interact through a communication network. The relationship of client and server arises by virtue of computer programs running on the respective computers and having a client-server relationship to each other. In some embodiments, a server transmits data, e.g., an HTML page, to a user device, e.g., for purposes of displaying data to and receiving user input from a user interacting with the device, which acts as a client. Data generated at the user device, e.g., a result of the user interaction, can be received at the server from the device.

While this specification contains many specific implementation details, these should not be construed as limitations on the scope of any disclosure or on the scope of what may be claimed, but rather as descriptions of features that may be specific to particular embodiments of particular disclosures. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially be claimed as such, one or more features from a claimed combination can in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system modules and components in the embodiments described above should not be understood as requiring such separation in all embodiments, and it should be understood that the described program components and systems can generally be integrated together in a single software product or packaged into multiple software products.

Particular embodiments of the subject matter have been described. Other embodiments are within the scope of the following claims. For example, the actions recited in the claims can be performed in a different order and still achieve desirable results. As one example, the processes depicted in the accompanying figures do not necessarily require the particular order shown, or sequential order, to achieve desirable results. In some cases, multitasking and parallel processing may be advantageous.

The following numbered clauses are also included as part of the present disclosure:
Clause 1. A computer-implemented method, comprising:
   obtaining, from a first video, a first description generated by a first language model of multiple language models implemented on one or more servers, wherein the first description describes a plot of the first video;
   obtaining a second description generated by a second language model of the multiple language models, wherein the second description describes one or more entities in the first video;
   obtaining a third description generated by a third language model of the multiple language models, wherein the third description describes an intent of the first video; and
   generating a textual description of the first video based on the first description, the second description, and the third description.
Clause 2. The computer-implemented method of clause 1, comprising:
   obtaining a fourth description generated by a fourth language model, wherein the fourth description comprises information in the first video that is associated with one or more label categories, wherein the textual description of the first video is generated based on the first description, the second description, the third description and the fourth description.
Clause 3. The computer-implemented method of clause 1, comprising:
   obtaining, from the second language model, an initial description of one or more entities in the first video;
   obtaining, from a first database, descriptions related to the initial description; and
   sending the descriptions to the second language model to generate a refined description based on the first video and the descriptions related to the initial description.
Clause 4. The computer-implemented method of clause 1, wherein the second language model is communicatively coupled to a first database, wherein the computer-implemented method comprises:
   in response to determining that the second description is not included in the first database, adding the second description to the first database.
Clause 5. The computer-implemented method of clause 2, wherein the fourth language model is communicatively coupled to a second database, wherein the computer-implemented method comprises:
   in response to determining the fourth description comprises information corresponding to a label category that is not included in the second database, adding the label category to the second database.
Clause 6. The computer-implemented method of clause 2, comprising:
   sending the first description, the second description, the third description, and the fourth description to a fifth language model; and
   generating the textual description of the first video by the fifth language mode that aggregates the first description, the second description, the third description, and the fourth description.
Clause 7. The computer-implemented method of clause 1, further comprising:
   generating an embedding of the first video based on the textual description of the first video.
Clause 8. The computer-implemented method of clause 7, further comprising:
   determining whether the first video is similar to a second video based on embeddings of the first video and the second video.
Clause 9. The computer-implemented method of clause 8, further comprising:
   in response to determining that the first video is similar to the second video, adding the first video to a same cluster as the second video.
Clause 10. A computer-readable storage media storing one or more instructions that, when executable by one or more computers, cause the one or more computers to perform operations comprising:
   obtaining, from a first video, a first description generated by a first language model of multiple language models implemented on one or more servers, wherein the first description describes a plot of the first video;
   obtaining a second description generated by a second language model of the multiple language models, wherein the second description describes one or more entities in the first video;
   obtaining a third description generated by a third language model of the multiple language models, wherein the third description describes an intent of the first video; and
   generating a textual description of the first video based on the first description, the second description, and the third description.
Clause 11. The computer-readable storage media of clause 10, wherein the operations comprise:
   obtaining a fourth description generated by a fourth language model, wherein the fourth description comprises information in the first video that is associated with one or more label categories, wherein the textual description of the first video is generated based on the first description, the second description, the third description and the fourth description.
Clause 12. The computer-readable storage media of clause 10, wherein the operations comprise:
   obtaining, from the second language model, an initial description of one or more entities in the first video;
   obtaining, from a first database, descriptions related to the initial description; and
   sending the descriptions to the second language model to generate a refined description based on the first video and the descriptions related to the initial description.
Clause 13. The computer-readable storage media of clause 10, wherein the second language model is communicatively coupled to a first database, wherein the computer-implemented method comprises:
   in response to determining that the second description is not included in the first database, adding the second description to the first database.
Clause 14. The computer-readable storage media of clause 11, wherein the fourth language model is communicatively coupled to a second database, wherein the computer-implemented method comprises:
   in response to determining the fourth description comprises information corresponding to a label category that is not included in the second database, adding the label category to the second database.
Clause 15. The computer-readable storage media of clause 11, wherein the operations comprise:
   sending the first description, the second description, the third description, and the fourth description to a fifth language model; and
   generating the textual description of the first video by the fifth language mode that aggregates the first description, the second description, the third description, and the fourth description.
Clause 16. The computer-readable storage media of clause 11, wherein the operations further comprise:
   generating an embedding of the first video based on the textual description of the first video.
Clause 17. The computer-readable storage media of clause 16, wherein the operations further comprise:
   determining whether the first video is similar to a second video based on embeddings of the first video and the second video.
Clause 18. The computer-readable storage media of clause 17, wherein the operations further comprise:
   in response to determining that the first video is similar to the second video, adding the first video to a same cluster as the second video.
Clause 19. A computer-implemented system, comprising:
   one or more computers; and
   one or more computer memory devices interoperably coupled with the one or more computers and having computer-readable storage media storing one or more instructions that, when executed by the one or more computers, perform one or more operations comprising:
      obtaining, from a first video, a first description generated by a first language model of multiple language models implemented on one or more servers, wherein the first description describes a plot of the first video;
      obtaining a second description generated by a second language model of the multiple language models, wherein the second description describes one or more entities in the first video;
      obtaining a third description generated by a third language model of the multiple language models, wherein the third description describes an intent of the first video; and
      generating a textual description of the first video based on the first description, the second description, and the third description.
Clause 20. The computer-implemented system of clause 19, wherein the operations comprise:
   obtaining a fourth description generated by a fourth language model, wherein the fourth description comprises information in the first video that is associated with one or more label categories, wherein the textual description of the first video is generated based on the first description, the second description, the third description and the fourth description.

## Claims

1. A computer-implemented method (200), comprising:
obtaining (204), from a first video, a first description generated by a first language model of multiple language models implemented on one or more servers, wherein the first description describes a plot of the first video;
obtaining (206) a second description generated by a second language model of the multiple language models, wherein the second description describes one or more entities in the first video;
obtaining (208) a third description generated by a third language model of the multiple language models, wherein the third description describes an intent of the first video; and
generating (212) a textual description of the first video based on the first description, the second description, and the third description.

2. The computer-implemented method (200) of claim 1, comprising:
obtaining (210) a fourth description generated by a fourth language model, wherein the fourth description comprises information in the first video that is associated with one or more label categories, wherein the textual description of the first video is generated based on the first description, the second description, the third description and the fourth description.

3. The computer-implemented method (200) of claim 1, comprising:
obtaining, from the second language model, an initial description of one or more entities in the first video;
obtaining, from a first database, descriptions related to the initial description; and
sending the descriptions to the second language model to generate a refined description based on the first video and the descriptions related to the initial description.

4. The computer-implemented method (200) of claim 1, wherein the second language model is communicatively coupled to a first database, wherein the computer-implemented method comprises:
in response to determining that the second description is not included in the first database, adding the second description to the first database.

5. The computer-implemented method (200) of claim 2, wherein the fourth language model is communicatively coupled to a second database, wherein the computer-implemented method comprises:
in response to determining the fourth description comprises information corresponding to a label category that is not included in the second database, adding the label category to the second database.

6. The computer-implemented method (200) of claim 2, comprising:
sending the first description, the second description, the third description, and the fourth description to a fifth language model; and
generating the textual description of the first video by the fifth language mode that aggregates the first description, the second description, the third description, and the fourth description.

7. The computer-implemented method (200) of claim 1, further comprising:
generating (214) an embedding of the first video based on the textual description of the first video.

8. The computer-implemented method (200) of claim 7, further comprising:
determining (216) whether the first video is similar to a second video based on embeddings of the first video and the second video.

9. The computer-implemented method (200) of claim 8, further comprising:
in response to determining that the first video is similar to the second video, adding (218) the first video to a same cluster as the second video.

10. A computer-readable storage media storing one or more instructions that, when executable by one or more computers, cause the one or more computers to perform operations comprising:
obtaining (204), from a first video, a first description generated by a first language model of multiple language models implemented on one or more servers, wherein the first description describes a plot of the first video;
obtaining (206) a second description generated by a second language model of the multiple language models, wherein the second description describes one or more entities in the first video;
obtaining (208) a third description generated by a third language model of the multiple language models, wherein the third description describes an intent of the first video; and
generating (212) a textual description of the first video based on the first description, the second description, and the third description.

11. The computer-readable storage media of claim 10, wherein the operations comprise:
obtaining (210) a fourth description generated by a fourth language model, wherein the fourth description comprises information in the first video that is associated with one or more label categories, wherein the textual description of the first video is generated based on the first description, the second description, the third description and the fourth description.

12. The computer-readable storage media of claim 10, wherein the operations comprise:
obtaining, from the second language model, an initial description of one or more entities in the first video;
obtaining, from a first database, descriptions related to the initial description; and
sending the descriptions to the second language model to generate a refined description based on the first video and the descriptions related to the initial description.

13. The computer-readable storage media of claim 10, wherein the second language model is communicatively coupled to a first database, wherein the computer-implemented method comprises:
in response to determining that the second description is not included in the first database, adding the second description to the first database.

14. The computer-readable storage media of claim 11, wherein the fourth language model is communicatively coupled to a second database, wherein the computer-implemented method comprises:
in response to determining the fourth description comprises information corresponding to a label category that is not included in the second database, adding the label category to the second database.

15. A computer-implemented system, comprising:
one or more computers; and
one or more computer memory devices interoperably coupled with the one or more computers and having computer-readable storage media storing one or more instructions that, when executed by the one or more computers, perform one or more operations comprising:
obtaining (204), from a first video, a first description generated by a first language model of multiple language models implemented on one or more servers, wherein the first description describes a plot of the first video;
obtaining (206) a second description generated by a second language model of the multiple language models, wherein the second description describes one or more entities in the first video;
obtaining (208) a third description generated by a third language model of the multiple language models, wherein the third description describes an intent of the first video; and
generating (212) a textual description of the first video based on the first description, the second description, and the third description.
